# EUROPEAN PATENT APPLICATION

(11) **EP 0 574 717 A2**
(43) Date of publication of application: **22.12.1993**
(21) Application number: 93108101.2
(22) Date of filing: 18.05.1993
(51) Int. Cl.: B01D 11/04, B01D 61/38

(54) **Liquid-liquid extraction across ion-exchange membranes**

(30) Priority: 18.05.1992 IL 101901; 18.05.1992 IL 101905
(71) Applicant: YEDA RESEARCH AND DEVELOPMENT CO. LTD., Rehovot 76100 (IL)
(72) Inventor: Kedem, Ora, Rehovot 76283 (IL); Bromberg, Lev, Mobile Post Shimshon 99705 (IL); Eyal, Aharon M., Ramat Rachel (IL)
(74) Representative: VOSSIUS & PARTNER

(57) **Abstract**

Method and apparatus for indirect extraction of an aqueous solution with a water-immiscible organic extractant across an ion-exchange membrane. The method and apparatus are applicable, among others, for the recovery of acids from fermentation broths.

## Description

The present invention concerns liquid-liquid extraction of ions from an aqueous feed solution into a liquid, water or immiscible organic medium. The extraction process and apparatus concerned by the present invention is of the kind wherein the aqueous and organic phases are separated by a solute-permeable membrane.

In the following a liquid-liquid extraction process of the kind in which the aqueous and organic phases are first mixed and then allowed to settle and separate will be referred to as *"direct contact extraction"*; a process in which the said two phases are separated throughout by a solute-permeable membrane will be referred to as *"indirect contact extraction"*; and an apparatus for rise in indirect contact extraction will be referred to as *"indirect contact extraction apparatus"*.

Extraction of ions from an aqueous solution is required for many technological purposes such as, for example, recovery of metals from diluted aqueous solution in the course of hydrometallurgical processes, decontamination of water by the removal of noxious metallic ions therefrom, removal of acids from reaction mixtures in the course of an ongoing chemical reaction and the like. Conventionally, ion extraction from aqueous solution is performed by direct contact extraction techniques using water immiscible organic extractants which in the case of cation extraction may contain cation specific ligands and in the case of anion extraction long chain amines or ammonium salts.

In case of dilute aqueous feed solutions the technical efficiency and cost effectiveness of the direct extraction method may be limited in consequence of solvent entrainment and emulsification, and also by the difficulties encountered in contacting two volumes of very different order. Moreover, entrainment and dissolution of extractant into the aqueous phase contaminates the latter, leading to a pollution problem which may be even more important than the economic aspect of the loss of extractant.

In the performance of direct contact solvent extraction of aqueous solutions, the choice of the extractant in each individual case depends on factors influencing the rate and efficiency of phase separation such as difference in specific gravities, viscosity and surface tension, all of which have to be considered. In practical terms this means that the system which would be optimal for separation cannot always be applied.

In view of the shortcomings of the direct contact extraction technique, attempts have been made over the last twenty years or so, to develop indirect contact extraction methods. To this end it has been proposed to use liquid membranes, either in the form of double emulsions or in the form of a liquid held in the pores of a porous solid support. However, both types of liquid membranes proved to be very unstable and were found to cause substantial losses of extractant. As a result these techniques could not be commercialized.

In an attempt to overcome the instability problem of liquid membranes it was proposed to use for the performance of indirect contact extraction highly plasticized polymer membranes. While the stability of such membranes was adequate it was found, however, that the ion flux across such membranes was unsatisfactory.

It has also been proposed to use a solute-permeable membrane in the form of a rather dilute gel formed in the pores of a solvent stable porous membrane. Such membranes were shown to be stable enough and to hinder transfer less than the plasticized polymer membrane and to avoid solvent losses in consequence of emulsification; they do, however, not prevent solvent losses by dissolution.

Contact between the aqueous feed and an organic extraction medium can be established by porous membranes which are preferentially wetted by one of the phases. The wetting phase is held in the pores by surface forces. To stabilize this system a controlled pressure drop is necessary as described in US Patent 4,997,569. Porous membranes obviously do not prevent dissolution of organic components in the aqueous phase. For the use of porous membranes in indirect contact extraction, flow modules have been described, for example, by Hoechst-Celanese and in International Patent Application PCT/NL/91/00001.

Yet another method for the indirect contact extraction of solutes is disclosed in US 3,956,112. According to that disclosure the two liquid phases are separated by a non-porous polymer membrane which is swollen by both solvents whereby a transition zone is formed which provides for relatively high diffusivity. The chemistry of the membrane forming polymer has to be adapted to such swelling capacity. While in case of application to extraction of ionic solutes from an aqueous solution such membranes eliminate emulsification and solvent entrainment, they do not avoid diffusion of solvent from the organic into the aqueous phase.

It has been proposed to increase productivity of conventional fermentation operations for the production of carboxylic acids by extracting product carboxylic acid from the fermentation broth while the fermentation is ongoing. Such techniques require the use of suitable semi-permeable membranes which allow the permeation of the product acid, hold back both the extractant and water and have the required degree of mechanical and heat stability. However, no adequate membrane has yet been found which meets all these requirements.

To sum up, while theoretically the indirect contact extraction method seems promising for overcoming difficulties inherent in direct contact extraction methods, all such proposals so far have proved to be unsatisfactory, and the long felt need for a workable indirect contact extraction method, notably for the extraction of ions and acids from aqueous solutions, has to date not been met. Accordingly, it is the object of the invention to provide such a method.

It is a further object of the present invention to provide a method of producing carboxylic acid by fermentation in which product carboxylic acid is withdrawn from the fermentation broth during ongoing fermentation.

In accordance with the present invention, there is provided an indirect contact extraction method for the extraction of ions from an aqueous solution by means of a water-immiscible organic extractant to yield a loaded extractant, said aqueous solution and organic extractant being separated by a solute-permeable membrane, characterized in that said solute-permeable membrane is an ion-exchange membrane.

The invention further provides an indirect contact extraction apparatus for carrying out the above process, comprising at least one ion-exchange membrane module.

Ion-exchange membranes are known and commercially available. Their main use is in the field of water desalination by processes in which ions are caused to migrate across such membranes from a dilute to a concentrated aqueous solution under the influence of an electric field and to a lesser degree in a so called *"Donnan dialysis"* in which ions are exchanged between two aqueous solutions across an ion-exchange membrane. It has, however, never before been suggested to employ an ion exchange membrane for the transfer of ions from an aqueous to a non-aqueous phase and without the application of an electric field.

The term *"organic extractant"* used herein denotes an organic solvent or a mixture of such solvents which contains at least one organic substance capable of binding to the extracted ions. For example, in the case of cation extraction the extractant will include at least one so-called ligand, e.g. an oxime or a crown ether, capable of complexing metal cations. If desired, such ligands may be cation-specific whereby a particular cation may be selectively extracted out of an aqueous feed solution.

Where the extracted ions are anions or acids the binding substance contained in the extractant may be a long-chain organic amine or a quaternary ammonium salt, the attribute *"long-chain"* denoting organic amines and quaternary ammonium salts having at least one hydrocarbon chain of at least eight carbon atoms.

As a rule, the loaded extractant will be stripped of the extracted ions or salts with an aqueous phase in order to recycle the extractant and recover salts of extracted cations or salts or free acids or extracted anions. If desired, the stripping of the solvent can also be effected by indirect contact extraction in which the aqueous and extractant phases are separated by an ion-exchange membrane. Alternatively, the loaded extractant may be subjected to direct contact extraction.

In practicing the invention for the purpose of cation extraction from an aqueous solution, a cation-exchange membrane is used and the extractant contains a ligand component having a complexing affinity to metal cations to be extracted from the aqueous phase.

The process of cation extraction in accordance with the present invention takes advantage of the special properties of cation exchange membranes and of the properties of the ligands used for the extraction, which extraction requires exchange of cations between the two phases and not transfer of electro-neutral molecules. Cations are taken up preferentially by the membrane even from dilute salt solutions and therefore permeate at an appreciable rate at low and medium degree of swelling. In accordance with the invention, it is possible to select cost effectively ligands according to specific requirements, e.g. cation specific ligands, even where such specific ligands are more expensive.

Specific ligands which transfer metals into the organic medium by cation exchange with the aid of a cation-exchange membrane are themselves anionic and their transfer into the aqueous solution is very effectively prevented by the negatively charged cation-exchange membrane whereby ligand loss is prevented.

The stability of conventional, commercially available cation exchange membranes has been found satisfactory for the purposes of cation extraction in accordance with the present invention and it has further been found that it is not necessary to adjust the membrane properties for the extraction of particular cations. Typical conventional cationic exchange membranes which are suitable for the purposes of the present invention are such that carry sulfonic groups e.g. sulfonated polystyrene interpolymer with neutral polymers, sulfochlorinated polyethylene, sulfonated polysulfone, sulfonic perfluorinated polyolefins and others. Commercial cationic exchange membranes available under the trade names NEOSEPTA™, SELEMION™ and NAFION™ are, for example, suitable.

It may be advantageous to use cation exchange membranes of higher exchange capacity than usual, e.g. about 2-4 meq/gr instead of the customary appr.1 meq/gr. Such increased charge density enhances cation permeation which is desirable; it also may increase the leak of anions which in theory could lead to a leak of the anionic ligands from the organic to the aqueous phase. In practice, however, this will, as a rule, not occur because usually the ligands have relatively high molecular dimensions which prevents their leaking across the cation exchange membrane even with higher than usual swelling by water.

In general, cation exchange membranes have little tendency to fouling, because suspended colloids are nearly exclusively negatively charged and are thus repelled by the negative fixed charges of the membranes. On the other hand, some multivalent cations may cause membrane poisoning, i.e. bind to the charged sites. This problem has to be addressed specifically for each system.

In practicing the invention for the extraction of water soluble anions and dilute acids, anion exchange membranes are used and the extractant will contain at least one long chain quaternary ammonium salt or amine for binding the extracted anion or acid, as the case may be. If desired the extractant may also contain a water insoluble acid, e.g. diethylhexyl phosphoric acid. The positively charged anion-exchange membranes allow fast permeation of anions and in general prevent passage of metal cations. However, the passage of protons is suppressed only in specially prepared *"acid blocking"* anion-exchange membranes. Thus, unless the anion-exchange membranes are so prepared, molecular acids can diffuse across them and will be retained in the organic phase by at least one organic amine which serves as binding agent and with which the extracted acids forms a quaternary ammonium salt. Where, on the other hand, the membrane is acid blocking, only the acid anion will be extracted and in this case the binding agent in the extractant will be a quaternary ammonium salt which exchanges its original anion for the extracted one.

The quaternary amines or ammonium salts which are used as binding agents for the extraction of anions and acids in accordance with the present invention are very effectively retained in the organic phase by the anion-exchange membranes.

For the extraction of anions or acids in accordance with the teachings of the present invention, commercially available anion-exchange membranes are suitable which in general contain quaternary amino groups for anion-exchange; modified polysulfones, crosslinked and carrying amino groups may also be used; and there are others.

For the indirect extraction of anions and acids, anion-exchange membranes of a relatively high degree of swelling may be especially suitable. The long-chain amines are readily retained even by said loose anion-exchange membranes.

Heat-sealable crosslinked anion-exchange membranes which are very suitable for the purposes of the present invention when applied to anion extraction are described by A. Warshawsky and O. Kedem, *J. Membr*. *Sci.,* **53** (1990) 37.

The present invention also provides a method of recovering carboxylic acid produced by fermentation of an aqueous fermentation broth within a fermentor vessel, comprising withdrawing product carboxylic acid from the aqueous fermentation broth by indirect contact extraction across an anion-exchange membrane by means of a water-immiscible organic extractant containing at least one long-chain organic amine.

Due to the fact that in accordance with the above recovery process direct contact between the fermentation broth and the extractant is avoided there are less limitations on the choice of the extractant and factors such as viscosity, density and surface tension of the extractant, which may be detrimental in direct contact extraction, need not be considered.

In accordance with one mode of practicing the above recovery process applicable when the fermentation is performed batchwise, the product carboxylic acid is withdrawn by indirect contact extraction at the end of the fermentation process. The main advantage in this mode of operation resides in the already mentioned greater freedom in the choice of the extractant due to the fact that factors such as viscosity, density and surface tension need not be taken into consideration, which makes it possible to focus mainly on the extraction capacity of the extractant.

In accordance with another mode of practicing the above recovery process, the product carboxylic acid is withdrawn continuously from the fermentation broth by indirect contact extraction in the course of fermentation. This mode of operation affords the additional advantage of preventing product inhibition without at the same time causing any extractant pollution of the fermentation broth.

In accordance with one embodiment of the continuous mode of operation, at least one sealed module consisting of two spaced membranes is fitted within the fermentor vessel and extractant is continuously circulated between the membranes.

In accordance with another embodiment of the continuous mode of operation, fermentation broth is circulated continuously through a suitably designed membrane module located outside the fermentor vessel and comprising at least one fermentation broth flow path and one extractant flow path.

If desired, the fermentation broth withdrawn from the fermentation vessel may be filtered before its introduction into the membrane module for the removal of biomass comprising microorganism cells and cell debris, in which case a hollow fiber membrane module may, for example, be used for the indirect contact extraction. If the whole broth is circulated through the membrane module without preliminary removal of the biomass, a membrane module with wide enough channels between flat membranes is necessary, e.g. such as is used in microfiltration processes for the separation of cells from fermentation media.

In either mode of operation the loaded organic extractant is subjected to treatment for the recovery of the carboxylic acid therefrom and is then recycled. If desired, the recovery of the carboxylic acid from the extractant may be by way of stripping with water or an aqueous solution of a desired composition, by indirect contact extraction across an anion-exchange membrane. Alternatively, direct contact extraction or distillation may also be employed.

The indirect contact extraction process according to the invention is clearly distinguished from the teachings of US 3,956,112: whereas in accordance with the latter molecular solutes are extracted from one liquid into another by diffusion across a solvent phase inside an electrically neutral, swollen membrane, in accordance with the present invention ions are transported by an ion exchange mechanism across ion exchange membranes bearing electrically charged ionic groups.

The ion exchange membranes used for the purpose of the present invention should preferably be in the form of a leak-free convenient module such as a potted capillary or a hollow membrane fiber tube-and-shell module, a spiralwound membrane sleeve or any similar arrangement by which the two circulating streams are totally separate. The surface area per volume of an ion exchange membrane in a module according to the invention of low hydrodynamic resistance and with good mixing, is of the order of several m² per liter.

From the general kinetics of ion exchange it is known that ion transport in dilute aqueous solutions, which are the main area of application of the present invention, is film-controlled, i.e. the flow through or into the ion exchanger is faster than the flow through the unstirred solution adjacent to it. The two critical factors are therefore the membrane area and the thickness of the unstirred layer. With depolarizing crossflow and turbulence promoting spacers available such unstirred layer can be kept within the range of 10-50 µm.

Anion-exchange membranes carry fixed positive charges and are thus not compatible with cells which generally carry negative surface charges and are accordingly attracted to the membrane and cause fouling thereof. To avoid this and achieve compatibility, the anion-exchange membranes to be used in the fermentation in accordance with the present invention are coated with a thin, negatively charged layer, e.g. of a polymer carrying sulfonic groups and having modular dimensions, the thickness of which should preferably not exceed a fraction of micron.

As a rule, in the performance of the present invention the ions are transferred from an aqueous donor solution to an aqueous acceptor solution via the organic extractant. Accordingly, where both extraction and stripping are performed by indirect contact extraction with ion exchange membranes, two membrane modules are required for the overall process, one of which is in contact with the donor (feed) aqueous solution and the other with the acceptor (stripping) aqueous solution, and the organic phase is circulated between the two modules. Alternatively, a combined module as described in Basu, R., Sirkar, K.K., *AICHE* J. **37,** (1991) 383, may be used for this purpose. As already mentioned, stripping may also be effected by conventional direct contact extraction or by distillation in which case only one membrane module is required for the overall process.

The indirect contact extraction of ions from aqueous solution by means of an organic extractant in accordance with the teachings of the present invention overcomes the various difficulties of the conventional direct contact extraction and of the prior art indirect contact extraction methods. Thus, in accordance with the invention losses of solvent and binding agents are prevented, pollution of aqueous feed solutions is avoided and the ion exchange membranes used are stable. Limitations in the choice of the extracting phase inherent in direct contact extraction due to requirements of viscosity, density and surface tension are eliminated whereby the choice of extractants is widened.

In comparison with the various liquid membranes described in literature, the ion- exchange membranes used in accordance with the present invention are not only of a different order of stability but also promise higher rate of transport: diffusion of complexed ions in the organic medium of a liquid membrane is much slower than the permeation of cations by transport across a cation-exchange membrane. The permeation of anions or acids through anion-exchange membranes can be as rapid as free diffusion of complexes in liquids.

The present invention is also superior to the use of dilute gel in a porous medium in which the solvent has to be compatible with the polymer to form a convenient gel and the ligand has to be small enough for diffusion in the gel. In contrast, the use of ion exchange membranes in accordance with the invention allows optimization of the extractant medium for a given separation problem, free of limitations of the behavior of phases in extraction or of compatibility with polymer membranes. Also, all prior art indirect contact extraction processes including the solvent membrane extraction described in US 3,956,112, give rise to loss of valuable extractant by diffusion, which is avoided in accordance with the present invention.

The performance of the indirect extraction in accordance with the present invention is not membrane specific and the same type of membrane can serve for many extraction processes. Moreover, due to their stability, availability and diverse methods of preparation, ion exchange membranes can be made into modules with high packing density and effective depolarizing crossflow.

### DESCRIPTION OF THE DRAWINGS

In the following the present invention will be described, by way of example only, with reference to the enclosed drawings in which:
**Fig. 1** is a schematic drawing of a two-compartment permeation cell with ion-exchange membrane for use in accordance with the present invention;
**Fig. 2** is a schematic drawing of a three-compartment permeation cell with ion-exchange membrane for use in accordance with the present invention;
**Fig. 3** shows the concentration of Cu in the organic extractant in a two-chamber cell with a cation-exchange membrane as a function of time in the experiment of Example 1;
**Fig. 4** shows the copper transport in a three-chamber cell with cation-exchange membranes in terms of the kinetics of copper appearance in the receiver stripping solution in the experiment of Example 3;
**Fig. 5** shows the rate of sulfuric acid transport through a three-chamber cell with anion-exchange membranes in terms of the kinetics of acidification of the stripping receiver solution in the experiment of Example 5;
**Fig. 6** shows the rate of proton permeation in a three-chamber cell with anion-exchange membranes as a function of the concentration of the amine Alamine 304-1 in the extractant phase in the experiment of Example 6;
**Fig. 7** shows the rate of proton permeation in a three-chamber cell with anion-exchange membranes with a constant 0.57M concentration of H₂SO₄ in the feed and a constant 5 v/v% concentration of the amine Alamine 304-1 in the extractant, as a function of the concentration of di-2-ethylhexylphosphoric acid (DEHPA) in the extractant phase in the experiment of Example 7;
**Fig. 8** shows the results of lactic acid transport in a two-compartment cell according to Fig. 1 by way of acid disappearance in the feed phase in the experiment of Example 9;
**Fig. 9** is an axonometric view of a heat-sealed membrane module apparatus for use in accordance with the invention; and
**Fig. 10** is an axonometric view of a hollow filter membrane module apparatus for use in accordance with the invention.

### LABORATORY SCALE EXAMPLES

### Example 1

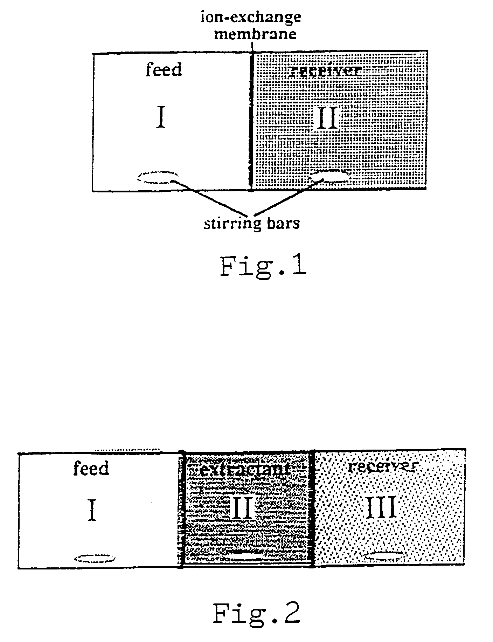

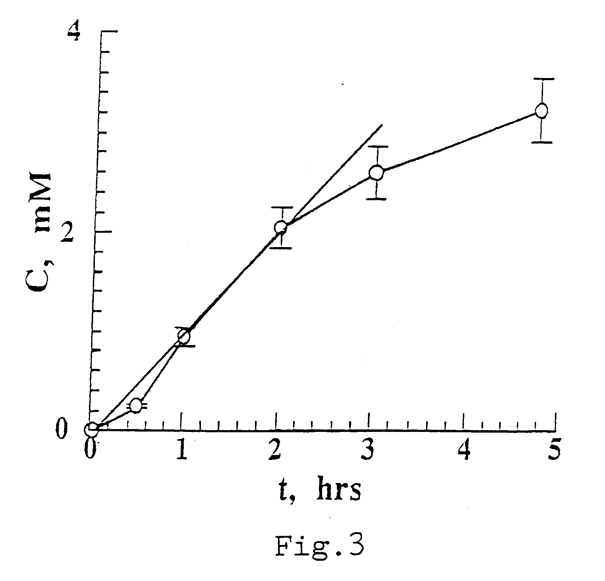

A conventional permeation cell was used, of the kind schematically shown in Fig. 1 comprising two chambers with magnetic stirring, each one having a volume of 20 ml and separated from each other by a cation-exchange membrane (NEOSEPTA CM-1™, Tokuyama Soda Co., Japan), having a thickness 0.15 mm, and an area of 5cm². The membrane was equilibrated with the feed solution containing 5 mM CuSO₄ in deionized water. At time t=0, one of the chambers designated I was then filled with the above solution as the feed solution and the other chamber designated II was filled with 10 v/v% solution of LIX64N (General Mills, Inc.) in dodecane as the organic extractant medium. Fig. 3 shows the concentration of copper in the extractant as a function of time. The copper transfer rate was 1.1x10⁻⁹ mol/cm²s; effective permeability of the system was measured to be 2.2x10⁻⁴cm/sec.

The feed solution was replaced by a 2.5 M H₂SO₄ as the stripping solution. Both copper and iron which was also contained in the extractant were re-extracted into this solution.

After 20 hours of the experiment the feed solution was tested for extractant phase components by the two following analytical techniques.

According to the method of Ashbrook [Ashbrook, A.W., *Anal. Chim. Acta*, **58** (1973)] calibration curves were prepared giving proportionality of the absorption at 375-385 nm to the known concentration of LIX64N at pH 3.7-4.0. Aliquots of the feed solution after 20 hours of experiment were brought to pH 3.7-4.0 by ammonium acetate solution and extracted by CCl₄. Measurements were made on a Uvikon 810 spectrophotometer in 1 cm quartz cells against a carbon tetrachloride blank.

In a second procedure, the aqueous solutions (40 ml) obtained after the completion of the transport experiment were placed in a separatory funnel, into which hexane (40 ml) was then added. The mixture was shaken periodically for 24 hrs and carefully separated. Concentrations of the extractant components were measured in hexane on a Finnigan 4500 GC-MS System.

The amount of LIX64N in the solutions were below the limit of detection (<1 ppm). The amounts of admixtures originating from the kerosene component of LIX64N were of the order of tens or hundreds ppb, clearly indicating that the ion exchange membrane virtually abolishes loss of extractant from the organic medium to the aqueous solutions.

For comparison the following extraction experiment was performed modelled on prior art: direct contact extraction: 10-20 v/v% LIX64N solution in dodecane (10 ml) was placed in a separatory funnel in which 100 ml of distilled water were then added. The mixture was shaken periodically for 24 hours and carefully separated. Measurements according to Ashbrook's method gave 4-9 ppm of LIX64N in solution. The amount of hydrocarbon components found after extraction was at least 10 times higher than that found in the aqueous solutions after transport through the ion exchange membrane into the organic medium.

This demonstrates that the prior art gives rise to serious pollution of the aqueous feed solution.

### Example 2

A conventional permeation cell was used of the kind schematically shown in Fig. 2, comprising three chambers with magnetic stirring, each one having a volume of 20 ml and separated from each other by membranes described in Example 1. Chamber I was filled with 4.7 mM CuSO₄ in deionized water as feed solution, chamber II with 10 v/v% LIX64N in dodecane as an organic extractant medium and chamber III with 3M H₂SO₄ as the stripping solution.

Effective permeability of the system was measured to be 2.7 10⁻⁵ cm/s which is high compared to the conventional systems using supported liquid membranes.

### Example 3

The three-chamber cell described above was assembled with a thin polyethylene based cation exchange membrane supplied by the Soreq Nuclear Center, Israel (ion-exchange capacity 3.9 meq/g, thickness 25 µm). the feed chamber (I) was filled with a mixed solution containing 7.2 mM CuSO₄, and Co(ClO₄)₂ each. Chambers II and III were filled as in Example 2.

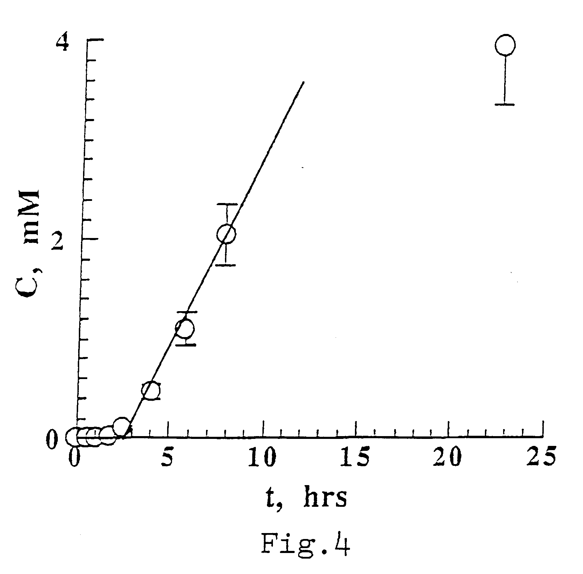

Co remained below ppm level in Chambers II and III throughout the experiment for 20 hours. Thus the specificity of the extraction process by the ion-exchange membrane was preserved in the membrane extraction method. The amount of copper in the stripping solution (III) increased linearly after a time lag, as shown in Fig. 4. The rate of permeation was measured to be J_{cu} = 4.4x10⁻¹⁰ mol/cm²s, and the effective permeability found using concentrations in the receiver chamber III was 6.1x10⁻⁵ cm/s, which is high.

### Example 4

The three-chamber cell described above was assembled with a thin polyethylene based cation-exchange membrane supplied by the Soreq Nuclear Center, Israel (ion-exchange capacity 2.2 meq/g, thickness 25 mm), the feed chamber (I) was filled with a mixed solution containing 1.4 mM AgNO3 and 1.3 M Na₂S₂O₃. Chamber II was filled with 10 v/v% di(2-ethylhexyl)dithiophosphoric acid in dodecane; chamber III was filled with 1 M H₂SO₄ saturated by thiourea. The silver transfer rate was measured to be 1.2x10⁻¹⁰ mol/cm²s; effective permeability was 8.6x10⁻⁵ cm/sec.

### Example 5

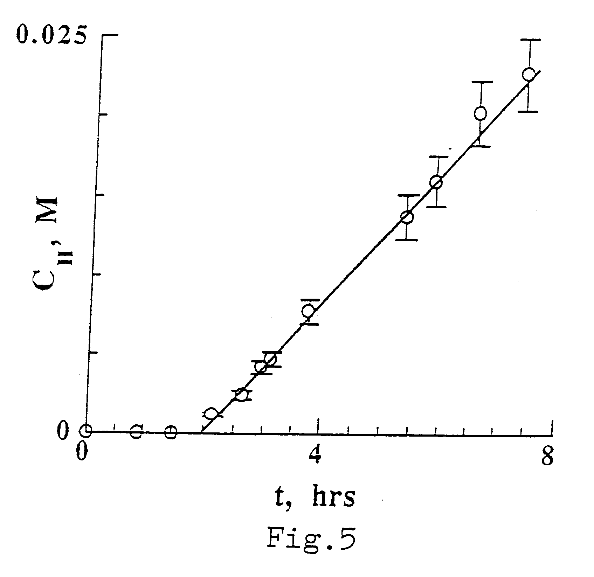

A three-chamber cell described above was formed with two separating anion-exchange membranes of the type NEOSEPTA AM-1™ (thickness 0.15 mm, ion-exchange capacity 1.6-2.0 meq/g) (Tokuyama Soda Co., Japan). Chamber I was filled with 0.57 M H₂SO₄ in deionized water, as the feed solution, chamber II with 20 v/v% tridodecylamine in n-dodecane as the organic extractant medium, and chamber III with deionized water (initial pH 7.71) as the stripping phase. The corresponding membranes were kept for 48 hours in the feed or receiver solutions before experiment. The amount of sulfuric acid in the feed phase (I) decreases. The amount of H₂SO₄ in the receiver phase (Chamber III) increases linearly after the lag time as can be seen in Fig. 5. The rate of proton permeation (J_{H}) indicates the rate of transport of the acid. The J_{H} value was measured to be 4.7x10⁻⁹ mol/cm²s, which is very high.

After 20 hours of the experiment the feed solution was tested for amine extractant by the method of Florence and Farrar (Florence T.M. and Farrar, Y.J., *Anal. Chim. Acta*, **63,** (1973), 255). Measurements were made on a Uvikon 810 spectrophotometer in 1cm quartz cells at 541 nm vs water. The amounts of tridodecylamine in the feed solution were below the limit of detection (<1 ppm).

In order to compare pollution of water with amines in a direct contact solvent extraction 50 ml of tridodecylamine was shaken with 100 ml of water, which gave about 5 ppm of amine in water solution.

### Example 6

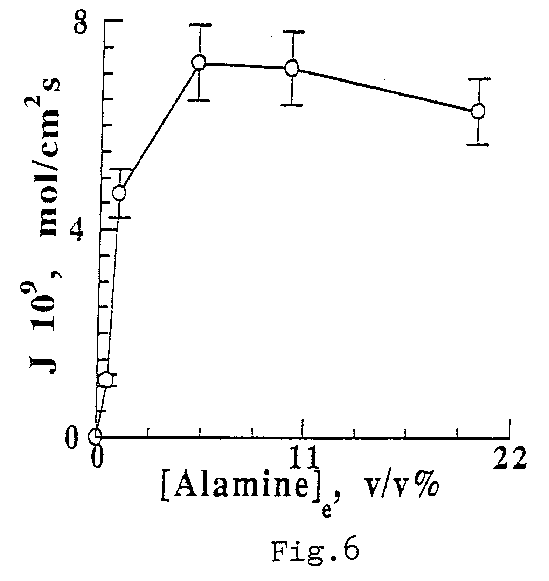

In the cell described in Example 5 chambers I and III were filled as described before, the chamber II was filled with a solution of a long-chain tertiary amine mixture known as Alamine 304-1™ (Henkel, Germany) in n-dodecane. The pH in the receiver phase was measured. Fig. 6 shows the rate of permeation as a function of concentration of Alamine 304-1 in the extractant phase. Very high permeation rates up to 7.2 10⁻⁹ mol/cm²s were achieved at even low concentration of Alamine not exceeding 5 v/v%. No transport was detected in the absence of Alamine in the extractant phase.

### Example 7

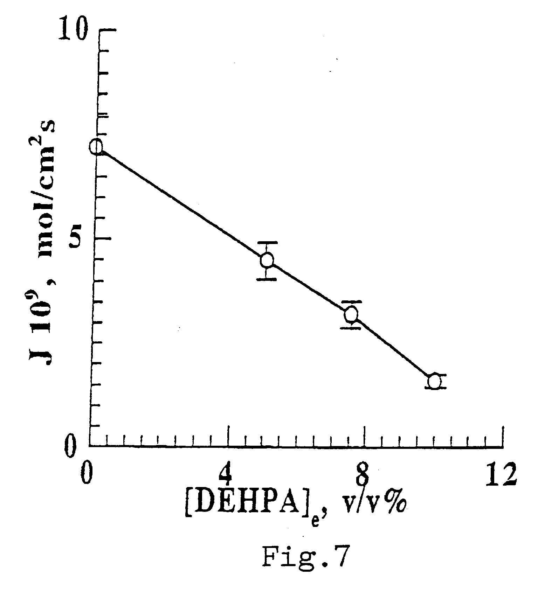

In the cell described in Example 6 chambers I and III were filled as described in Example 5 and chamber II contained 5 v/v% solution of Alamine 304-1™ in n-dodecane and varying concentrations of di-(2-ethylhexyl)phosphoric acid (DEHPA). The amounts of H⁺ in the stripping phase were measured at intervals. Fig. 7 shows the rate of permeation (J_{H}) as a function of concentration of DEHPA in the extractant phase. As can be seen in Fig. 7 permeability is decreased only slightly by the presence of DEHPA in the extractant medium at concentrations of up to 5 v/v%, as compared to permeability in the presence of Alamine only. This indicates that the membrane extraction can be based on coupled extractants.

### Example 8

In the cell described in Example 6, chamber I contained 0.4 M HCl in deionized water as the feed solution, chamber II contained 5 v/v% Alamine 304-1™ in n-dodecane as the extractant medium, and chamber III contained deionized water as a stripping phase (initial pH 7.07). Anion-exchange membranes produced by Toyo Soda Co., Japan (thickness 0.16 mm), were used. The proton transfer rate was measured to be about 5.1x10⁻⁹ mol/cm²s, which is equal to the data obtained with the anion-exchange membranes of the type NEOSEPTA AM-1™ under the same conditions. This indicates that the acid transport is practically independent of the nature of anion-exchange membranes and is determined by the extraction processes taking place in the extractant phase.

### Example 9

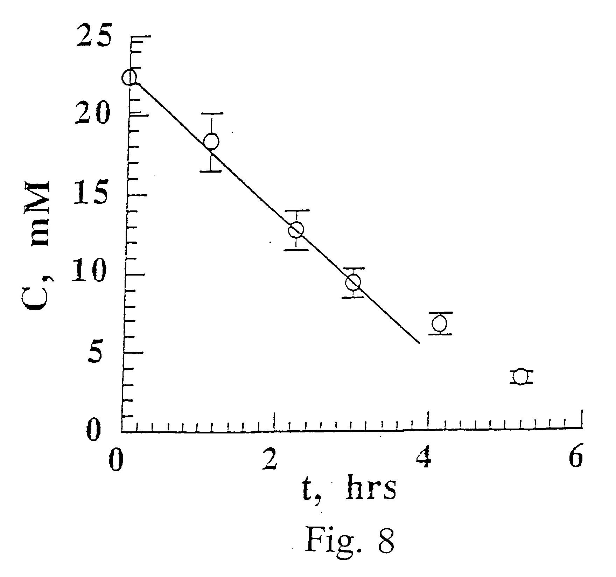

Kinetic experiments were conducted in a two-compartment cell as schematically shown in Fig. 1, in which the feed compartment I and the receiver compartment II were separated by an aminated polysulfone anion-exchange membrane made in accordance with the teachings of A. Warshawsky and O. Kedem (*loc. cit*) having an active area of 5 cm². The feed compartment I contained 20 ml of 22.5 mM of lactic acid in deionized water and the receiver compartment II contained 20 ml of 15v/v% of a long-chain tertiary amine mixture known as Alamine 304-1™ (Henkel, Germany) in technical grade oleyl alcohol obtained from Fluka (Germany). The experiments were repeated several times and transport of lactic acid is allotted in Fig. 8 which shows that decrease of acid in the feed solution was proportional to time. The transport rate was measured to be about 5 x 10⁻⁹ mol/cm²sec which is very high. The concentrations of Alamine in the feed aqueous solution after 24 hours were below a ppm level.

For comparison, direct extraction experiments were carried out. In such experiments 50 mL of the above solution of Alamine in oleyl alcohol was placed in a separatory funnel and 50 mL of distilled water was added. The mixture was shaken periodically for 48 hours and then carefully separated. The aqueous phase was then diluted to 100 mL with distilled water and the concentration of Alamine in the aqueous solution was determined by the method of T.M. Florence and Y.J. Farrar, (*loc. cit*.). Measurements were made on a Uvikon 810 spectrophotometer in 1cm quartz cells at 541 nm vs. water.

Concentrations of Alamine detected in these control extraction experiments exceeded 7 ppm in the aqueous phase.

### Example 10

In a cell as described in Example 1 the feed compartment contained about 1 M of citric acid in deionized water and the receiver solution contained 20 v/v% of Alamine in dodecane. The transport rate was estimated to exceed 10⁻⁸ mol/cm²sec. The concentrations of Alamine in the feed solution after 72 hours of the experiment were below 1 ppm level.

### Example 11

In a cell as described in Example 1 the feed solution contained 6.2 mol/kg lactic acid aqueous solution and the receiver consisted of Alamine, aromatic-free kerosene and octanol in w/w ratio 50:35:50. The cell was shaken by the mechanical shaker. After 3 hours shaking the receiver solution contained 0.19 mol of lactic acid per kg; amine concentration in the feed was measured to be 31 ppm. Direct contact extraction resulted in an aqueous solution containing more than 200 ppm of amine.

### Example 12

In a cell as described in Example 1 the feed and receiver solutions as described in Example 3 were separated by the membrane of type II. Lactic acid concentration in the receiver phase after 16 hours of the kinetic experiment was 0.76 mol/kg, which corresponds to the transport rate of about 1.3 10⁻⁷ mol/cm²sec. The amine concentration in the feed solution was less than 1 ppm.

### DESCRIPTION OF APPARATUS EMBODIMENTS

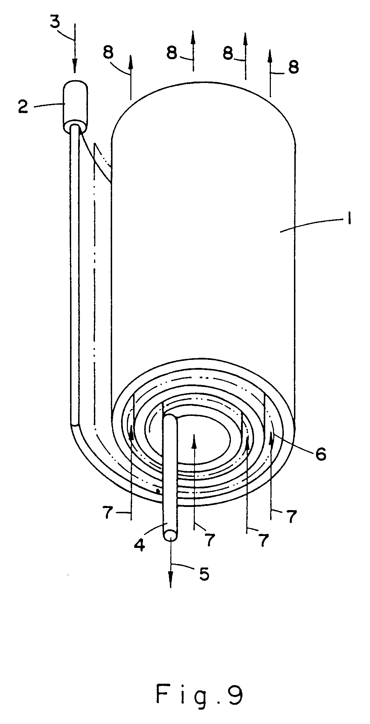

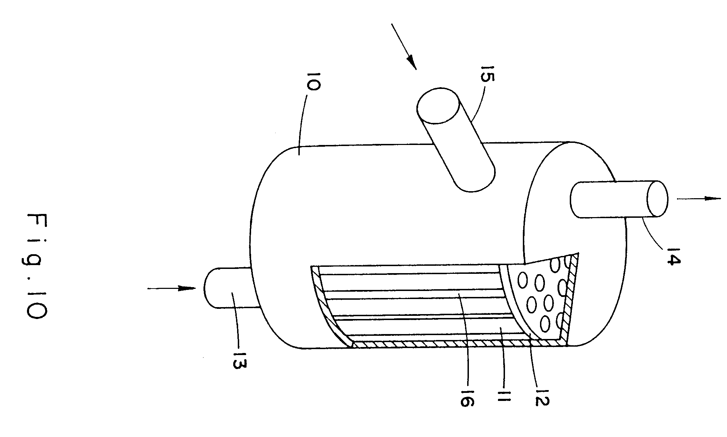

Attention is now directed to Figs. 9 and 10 which show two embodiments of an indirect contact extraction apparatus according to the invention.

Turning first to Fig. 9, there is shown schematically one embodiment of an indirect extraction apparatus according to the invention with a heat-sealed spirally wound ion-exchange membrane module. As shown, module 1 has an inlet 2 for lean extractant 3 and an outlet 4 for loaded extractant 5. A spacer 6 is spirally wound between the membrane windings and the resulting space serves for the throughflow of an aqueous phase, with a loaded aqueous solution 7 entering at one end and an aqueous raffinate 8 leaving at the opposite end. This apparatus is suitable for the extraction of an acid such as citric or lactic acid, from a fermentation broth without prior filtration.

Fig. 10 shows schematically another embodiment of an indirect extraction apparatus according to the invention with a hollow fiber membrane module. The apparatus comprises a cylindrical housing 10 holding an array of hollow fiber membranes 11 extending between an upper partition 12 and a similar lower partition (not shown), which partitions form together with the respective proximal end walls of housing 10 upper and lower collector chamber. Inlet 13 serves for the introduction of aqueous feed which enters the lower collector chamber from where it is distributed to the individual hollow fiber membranes 11, and outlet 14 serves for the withdrawal of aqueous raffinate delivered by hollow fiber membrane 11 into the upper collector chamber. Inlet 15 serves for the introduction of lean organic extractant into the space between said upper and lower partition so as to fill the interstices 16 between the hollow fiber membrane 11 and an outlet (not shown) is provided for the withdrawal of loaded extractant.

In operation of either of the above two apparatus embodiments, ions migrate across the membranes from the aqueous to the organic phase.

Hollow fibers with crossflow have a large membrane area per volume, and provide for well mixed flow of both phases. Designs for such crossflow modules consisting of porous hollow fibers are described in Hoechst-Celanese, Liqui-cel Membrane based Phase contact Modules and Systems (Hoechst separation technology) and in International Patent PCT/NL 91/00001. Such modules can be adapted for the purposes of the present process by coating the hollow fibers with a layer of ion-exchange polymer, thereby creating a highly permeable ion-exchange membrane. For the extraction of cations polyacid coatings may be used and for the extraction of anions the coatings may be polybases. The permselectivity of such coating will not suffice for conventional ion exchange processes, but is sufficient for the retention of the extracting agents.

The coating operation may be carried out on individual hollow fibers or potted fiber bundles by any of the accepted methods and materials, such as radiation grafting of vinyl pyridine; coating with polyvinyl pyridine and subsequent quaternization with mono- and bifunctional halogenated alkanes or aromatic hydrocarbons; coating with polyethylene imine and crosslinking by heat curing or bifunctional crosslinking agents; coating with halomethylated polystyrene or polysulfone, and subsequent amination; radiation grafting of acrylic acid or styrene sulfonic acid, or styrene and subsequent sulfonation; coating with sulfonated polysulfone; and similar methods.

## Claims

1. An indirect contact extraction method for the extraction of ions from an aqueous solution by means of a water-immiscible organic extractant to yield a loaded extractant, said aqueous solution and organic extractant being separated by a solute-permeable membrane, characterized in that said solute-permeable membrane is an ion-exchange membrane.

2. A method according to Claim 1 for the extraction of cations, characterized in that said ion-exchange membrane is a cation exchanger and in that the extractant contains at least one binding agent for cations.

3. A method according to Claim 2, characterized in that said at least one binding agent is selected from the group of oximes and crown ethers.

4. A method according to Claim 1 for the extraction of anions and acids characterized in that said ion-exchange membrane is an anion exchanger and in that the extractant contains at least one binding agent for anions or molecular acids.

5. A method according to Claim 4, characterized in that said at least one binding agent is selected from the group of organic amines and ammonium salts having at least one hydrocarbon chain of at least eight carbon atoms.

6. A method according to Claim 5, characterized in that the extractant also contains a water insoluble acid.

7. A method according to Claim 6, characterized in that said water insoluble acid is diethylhexyl phosphoric acid.

8. A method according to any one of Claims 1 to 7, characterized in that the loaded extractant is stripped with an aqueous phase.

9. A method according to Claim 8, characterized in that the stripping is performed by indirect contact extraction via a cation-exchange membrane.

10. A method according to Claim 8, characterized in that the stripping is performed by indirect contact extraction via an anion-exchange membrane.

11. A method according to Claim 4 applied to the recovery of carboxylic acid produced by fermentation in an aqueous fermentation broth within a fermentor vessel, characterized in that product carboxylic acid is withdrawn from the fermentation broth by indirect contact extraction across an anion-exchange membrane by means of a water-immiscible organic extractant containing at least one organic amine having at least one hydrocarbon chain of at least eight carbon atoms, to yield an acid loaded extractant.

12. A method according to Claim 11 wherein the fermentation is performed batchwise, characterized in that the product carboxylic acid is withdrawn by indirect contact extraction at the end of the fermentation process.

13. A method according to Claim 11, characterized in that the product carboxylic acid is withdrawn continuously from the fermentation broth by indirect contact extraction in the course of fermentation.

14. A method according to Claim 13, characterized in that at least one sealed module consisting of two spaced membranes is fitted within the fermentor vessel and extractant is continuously circulated between the membranes.

15. A method according to Claim 13, characterized in that fermentation broth is circulated continuously through a suitably designed membrane module located outside the fermentor vessel and comprising at least one fermentation broth flow path and one extractant flow path.

16. A method according to any one of Claims 11 to 15, characterized in that the acid loaded extractant is stripped of acid by indirect contact extraction with an aqueous phase across an anion-exchange membrane.

17. A method according to any one of Claims 11 to 16 applied to the production of citric acid.

18. A method according to any one of Claims 11 to 16 applied to the production of lactic acid.

19. A method according to any one of Claims 11 to 18, characterized in that the membrane is coated with a thin, negatively charged layer.

20. A method according to Claim 19, characterized in that said thin, negatively charged layer comprises a polymer carrying sulfonic groups.

21. An apparatus for the indirect contact extraction of an aqueous solution by means of a water-immiscible organic extractant, comprising at least one ion exchange membrane module and means for the separate introduction and withdrawal of aqueous and organic phases, whereby such phases circulate at the two sides of each membrane in the module.

22. An apparatus according to Claim 21, wherein said module is in the form of a spirally wound membrane sleeve.

23. An apparatus according to Claim 21, wherein said module comprises an array of hollow membrane fibers.
